# EUROPÄISCHE PATENTANMELDUNG

(11) **EP 0 549 961 A1**
(43) Veröffentlichungstag der Anmeldung: **07.07.1993**
(21) Anmeldenummer: 92121425.0
(22) Anmeldetag: 17.12.1992
(51) Int. Cl.: B27C 1/10, B23Q 5/027, B44D 3/16

(54) **Schwinghobel**

(30) Priorität: 28.12.1991 DE 4143151
(71) Anmelder: ROBERT BOSCH GMBH, 70442 Stuttgart (DE)
(72) Erfinder: Wünsch, Steffen, Dipl.-Ing., W-7038 Holzgerlingen (DE)

(57) **Zusammenfassung**

Handwerkzeug mit schwingendem, klingenartigem Schneidwerkzeug
Für ein kraftgetriebenes Handwerkzeug mit einem klingenartigen, auf einer Bahnkurve (15, 56) im wesentlichen parallel zur Oberfläche eines Werkstücks (34) schwingenden Schneidwerkzeug (13, 46) mit mindestens einer Schneide zur spanenden Bearbeitung des, insbesondere aus Holz bestehenden, Werkstücks (34), wird die Aufgabe Hobelarbeiten mit genauer Ecken- und Winkelzugänglichkeit zu ermöglichen, dadurch gelöst, daß das Schneidwerkzeug (13, 46) einen Arbeitshub und einen Leerhub auf einer gekrümmten, geschlossenen Bahnkurve (15, 56) ausführt.

## Beschreibung

### Stand der Technik

Die Erfindung geht aus von einem kraftgetriebenen Handwerkzeug nach der Gattung des Anspruchs 1.

Durch die US-A 4 559 661 ist ein gattungsgemäßes Handwerkzeug bekannt. Dieses Handwerkzeug ist zum Abschaben von Farben oder ähnlichen Oberflächenschichten an Werkstücken mittels einer auf einer geraden Bahn schwingenden Schneide vorgesehen und arbeitet auf Stoß. Das Handwerkzeug muß vom Bedienenden weg über das Werkstück geführt werden, damit ein gleichmäßiges, flächiges Bearbeiten möglich ist. Das klingenartige Schneidwerkzeug bewegt sich beim Schnitt vom Handwerkzeug weg und gleitet beim Zurückbewegen im Leerhub reibend über das Werkstück zum Handwerkzeug hin.

Das bekannte Handwerkzeug nach Art einer Ziehklinge ist nur für eine schabende aber nicht für eine spanende Bearbeitung geeignet, weil wegen der geraden Bewegungsbahn der Schneide kein sauberer Schnitt zustande kommt, der insbesondere für den Werkstoff Holz wichtig ist.

Die Winkelposition der Schneide ist nur von der Haltung der Führungshand des Bedienenden abhängig, nicht vorwählbar und nicht fest einstellbar. Nachteil des Handwerkzeugs ist der hohe Energiebedarf infolge des ständigen Reibens der Schneide auf der Werkstückoberfläche beim Leerhub.

Die auf Stoß arbeitende Schneide läßt auf das Werkstück Stützkräfte wirken, die das Handwerkzeug beim Arbeiten von der Werkstückoberfläche abzuheben suchen. Daraus folgt eine ungleichmäßige Spandicke und ein unsauberer, Holz-Werkstoffasern reißender Schnitt. Außerdem müssen hohe Kräfte durch den Bedienenden vor allem beim Halten eines gleichmäßigen Schnittwinkels aufgebracht werden. Der Bedienende ist dabei erheblichen Stößen und Vibrationen ausgesetzt. All das führt zwnagläufig zu einer Minderung der Arbeitsqualität.

Mit bekannten Handhobelmaschinen mit rotierendem, walzenförmigem Messerträger kann zwar sauber und vibrationsfrei gearbeitet werden, Ecken und Winkel sind aber nicht oder nur unzureichend zugänglich.

### Vorteile der Erfindung

Das erfindungsgemäße Handwerkzeug mit den kennzeichnenden Merkmalen des Anspruchs 1 hat demgegenüber den Vorteil, daß es mit konstanter, bisher nicht erreichter Spandicke schneiden kann, die über große Flächen ebenso wie in Winkeln und Ecken in hoher Qualität eingehalten wird, so daß auch Oberlächenprofile mit Hohlkehlen bündig bis an diese heran bearbeitet werden können, nicht nur farbabtragend sondern tatsächlich spanend. Dabei wird es auf Zug zum Bedienenden hin bewegt, wobei das Werkzeug nur bei der Hinbewegung schneidet und sich in einem Abstand über die Werkstückoberfläche zurückbewegt, ohne zu schneiden, d. h. das Werkzeug hat einen Arbeitshub und einen Leerhub. Dabei ist das Handwerkzeug mit besonders geringem Kraftaufwand präzise über das Werkstück, insbesondere beim vertikalen Bearbeiten von Tür- und Fensterrahmen äußerst bequem von oben nach unten, führbar.

Weitere, vorteilhafte Ausgestaltungen der Erfindung ergeben sich aus den abhängigen Unteransprüchen.

### Zeichnung

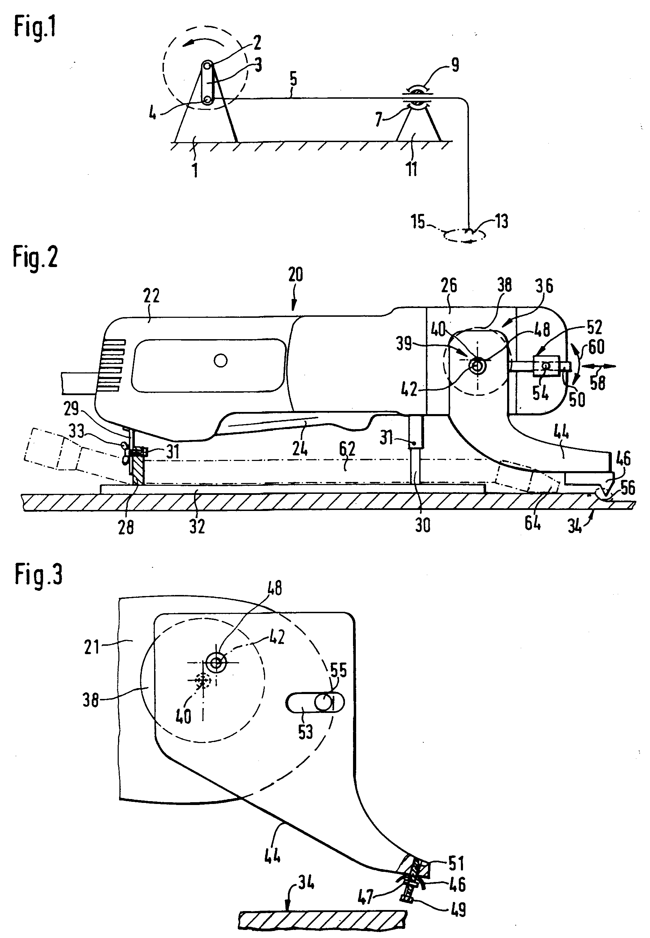

Ausführungsbeispiele der Erfindung sind in der nachfolgenden Beschreibung anhand der zugehörigen Zeichnungen näher erläutert. Es zeigen Figur 1 das kinematische Prinzip eines Ausführungsbeispiels der Erfindung, Figur 2 ein dem kinematischen Prinzip gemäß Figur 1 entsprechendes Ausführungsbeispiel eines Handwerkzeugs und Figur 3 das Vorderteil eines weiteren, Figur 1 entsprechenden Ausführungsbeispiels der Erfindung.

### Beschreibung des Ausführungsbeispiels

Das in Figur 1 dargestellte kinematische Prinzip eines Ausführungsbeispiels eines Schwinghobelantriebs zeigt einen ersten gestellfesten Lagerbock 1, in dem um eine Achse 2 drehbar eine Kurbelschwinge 3 angeordnet ist, an deren freien Ende in einem Drehgelenk eine Schubschwinge 5 gelagert ist. Die Schubschwinge 5 ist in einer als Gleitlagerung ausgestalteten Linearführung 7 hin und her bewegbar gelagert. Die Linearführung 7 selbst ist gemeinsam mit der Schubschwinge 5 frei drehbar in einem Gelenk 9, das in einem zweiten Lagerbock 11 gelagert angeordnet ist.

Auf ihrer dem Kurbelschwingenantrieb abgewandten Seite ist die Schubschwinge 5 abgewinkelt. Am freien Ende des abgewinkelten Bereichs trägt die Schubschwinge 5 ein Schneidwerkzeug 13, das sich auf der gestrichelt gezeichneten Bahnkurve 15 bewegt. Wird die Kurbelschwinge 3 entgegen dem Uhrzeigersinn um die Achse 2 bewegt, bewegt sich die Schubschwinge 5 hin und her. Die hin- und hergehende Bewegung wird von einer auf- und abgehenden Schwenkbewegung überlagert. Dadurch ergibt sich eine elliptischen Form der Bahnkurve 15.

Das in Figur 2 gezeigte, auf dem kinematischen Prinzip gemäß Figur 1 beruhende Ausführungsbeispiel zeigt einen Schwinghobel 20 mit einem Motorgehäuse 22, das einen Betätigungsschalter 24 enthält und das mit einem Getriebegehäuse 26 verbunden ist. Über höhenverstellbare bzw. gelenkige Stützen 28, 30 ist der Schwinghobel 20 mit einer Grundplatte 32 verbunden. Mit dieser kann sich der Schwinghobel 20 auf der Oberfläche eines Werkstückes 34 abstützen.

Im Getriebegehäuse 26 ist ein nicht dargestelltes Untersetzungsgetriebe enthalten, das die Drehbewegung eines nicht dargestellten Motors auf einen Exzentertrieb 36 überträgt. Der Exzentertrieb 36 besteht aus einem radförmigen Exzenterträger 38, der in einem Exzenterträgerlager 39 um eine Lagerachse 40 drehbar ist, und in einem Abstand von der Lagerachse 40 einen Exzenterzapfen 42 trägt. Der Exzenterzapfen 42 ist in der Schubschwinge 44 drehbar für die er als Mitnehmer dient. Die Schubschwinge 44 trägt an ihrem freien Ende ein klingenartiges Schneidwerkzeug 46 und besitzt ein zum Exzenterträgerlager 39 koaxiales Zapfenlager 48, in dem der Exzenterzapfen 42 gelagert ist. Die Schubschwinge 44 erstreckt sich bogenförmig, normal zur Oberfläche des Werkstücks 34 und endet parallel zu dieser verlaufend, vom Getriebegehäuse 26 wegführend.

Nahe dem Zapfenlager 48 trägt die Schubschwinge 44 einstückig oder mehrstückig ein sich parallel zur Werkstückoberfläche erstreckendes, zapfenartiges Schubstück 50.

Das Schubstück 50 ist umgriffen von einer Linearführung 52 und kann darin hin und her gleiten. Die Linearführung 52 ist über ein Drehgelenk 54 mit dem Getriebegehäuse 26 verbunden.

Dreht sich der Exzenterträger 38, wird die Schubschwinge 44 auf einer definierten, vorgeschriebenen Bahnkurve 56 bewegt, die, wie schon zu Figur 1 erläutert, sich aus einer linear hin- und hergehenden Bewegung und einer Schwenkbewegung zusammensetzt. Die Hin- und Herbewegung ist durch den Pfeil 58, die Schwenkbewegung ist durch den Doppelpfeil 60 bezeichnet.

Die Projektion der Bahnkurve ist in Figur 2 in einer zur Bearbeitungsfläche normalen Ebene, in Richtung des Vorschubs verlaufend, gezeigt. Die Bahnkurve kann in ihrem räulichen Verlauf allerdings auch auf beliebig geformten, z.B. geneigten oder gekrümmten Flächen verlaufen.

Parallel zur Grundplatte 32 ist ein Absaugkanal 62 geführt, dessen Mündung 64 eng benachbart zum Schneidwerkzeug 46 endet.

Die Stützen 28, 30 sind für eine Winkel- und eine Höhenverstellung des Schwinghobels 20 linear verschiebbar bzw. gelenkig ausgestaltet: So ist an der werkzeugnahen Stütze 30 ein Gelenk 31 angeordnet. Um dieses kann der Schwinghobel 20 bezüglich der Grundplatte 32 geschwenkt werden. Durch Schwenken des Schwinghobels 20 um das Gelenk 31 ist die Spantiefe des Schneidwerkzeugs 46 einstellbar.

Gegenüber der werkzeugfernen Stütze 28 ist der Schwinghobel 20 vertikal verstellbar, damit die Schwenkstellung des Gelenks 31 arretiert werden kann. Dazu ist eine Strebe 29 am Motorgehäuse 22 fest angeordnet, die an der Stütze 28 verschiebbar geführt ist. Die Strebe 29 hat einen nicht dargestellten, vertikalen Längsschlitz. Mittels einer durch diesen Längsschlitz tretenden, mit der Stütze 28 verschraubten Bolzen-, Mutterverbindung 31, 33 ist die Strebe 29 gegenüber der Stütze 28 arretierbar. Damit kann jede gewünschte Winkelstellung des Werkzeugs 46 zum Werkstück 34 eingestellt werden.

Das in Figur 3 dargestellte Vorderteil eines Schwinghobels 21 zeigt vergrößert einen radartigen Exzenterträger 38, identisch mit dem der Figur 2, der um eine Achse 40 im Gehäuse des Schwinghobels 21 drehbar gelagert ist. Der Exzenterträger 38 trägt drehfest einen Exzenterzapfen 42, der drehbar in der Schubschwinge 45 gelagert ist. Im Unterschied zum Ausführungsbeispiel der Figur 2 ist die Schubschwinge 45 mit einem Langloch 53 versehen, das einen am Schwinghobelgehäuse festehend angeordneten Zapfen 55 umgreift. Die Schubschwinge 45 kann sich um den Zapfen 55 drehen und am Zapfen 55 entlang gleiten, so daß damit auf einfache Weise eine Dreh-Schiebe-Führung realisiert ist.

Außerdem wird gezeigt, daß das Schneidwerkzeug 46 als U-profilartiges Wendemesser ausgestaltet ist, das nach Abnutzen einer ersten, nicht näher bezeichneten Schneide umgespannt wird, damit die zweite, nicht näher bezeichnete Schneide eingesetzt werden kann. Über ein unterlegscheibenartiges Spannstück 47 wird das Schneidwerkzeug 46 mittels einer in ein Gewinde 51 in die Schwinge 44 einschraubbaren Schraube 49 festgespannt.

Die Bewegungsabläufe am Schneidwerkzeug 46 bzw. am Kurbeltrieb 36 gemäß den Figuren 2 und 3 erfolgen wie zu Figur 1 erläutert. Es ist zu erkennen, daß, aufgrund der Drehung des Exzenterträgers 38 entgegen dem Uhrzeigersinn, die Bahnkurve 56 im Uhrzeigersinn verläuft. So taucht auf dem unteren, dem Werkstück 34 zugewandten, elliptischen Bereich der Bahnkurve 56 das Schneidwerkzeug 46 in die Oberfläche des Werkstücks 34 ein und erzeugt einen Span. Am Ende des spanenden Teils der Bahnkurve 56 taucht das Schneidwerkzeug 46 in einem stark gekrümmten Bahnteil aus dem Werkstück 34 auf und bewegt sich vom Getriebegehäuse 26 bzw. von der Grundplatte 32 weg über dem Werkstück 34. Am Ende dieses Leerhubs taucht das Schneidwerkzeug 46 auf einer kurzen, stark gekrümmten Bahn in das Werkstück 34 und beginnt mit dem nächsten Arbeitshub, wobei es sich wieder zur Grundplatte 32 hin bewegt.

Die Späne werden beim Austauchen des Schneidwerkzeugs 46 aus dem Werkstück 34 zur Grundplatte 32 in Richtung des Absaugkanals 62 geschleudert.

Da die Mündung 64 des Absaugkanals 62 noch vor der Grundplatte 32 nahe dem Schneidwerkzeug 46 angeordnet ist, werden die Späne sozusagen gezielt in die Mündung 64 des Absaugkanals geworfen. Dadurch werden die Späne besonders vollständig und gründlich entfernt.

Durch Ändern der Drehrichtung des Exzenterträgers 38 kann die Arbeitsweise des Schwinghobels 20 bei Bedarf auf Stoß umgestellt werden. Dieser kann so auch als Schaber zum Farben- bzw. Tapetenentfernen benutzt werden.

Es erscheint selbstverständlich, daß je nach Einsatz, entweder als Schwinghobel oder als Schaber oder je nach Arbeitsweise auf Stoß- oder Zug, das Schneidwerkzeug 46 einen unterschiedlichen Anschliff, eine geänderte Winkelposition oder Formgestalt hat.

Durch Verwendung eines von Bohrhämmern bekannten, modifizierten Taumelscheibenantriebs bei einem nichtdargestellten Ausführungsbeispiel kann das Schneidwerkzeug analog zur beschriebenen Bahnkurve bewegt werden. Dadurch daß das Schneidwerkzeug bei einem nichtdargestellten Ausführungsbeispiel quer zur Vorschubrichtung verschiebbar angeordnet ist, kann mit diesem Handwerkzeug rechts- oder linksbündig gehobelt oder geschabt werden, wie es insbesondere für Sims-Hobel erforderlich ist.

Bei einem anderen, nicht dargestellten Ausführungsbeispiel der Erfin- dung sind eine Vielzahl modifizierter Werkzeuge mit Zusatzfunktionen vorgesehen, etwa Schleifplatten, Bürsten und dergl.. Außerdem ist dafür ein u-förmig profiliertes Schneidwerkzeug mit einer ersten scharfen Schneidfläche und mit einer zweiten, über das Werkstück nachzuführenden glättenden Fläche, etwa mit Gleit- oder Rollkörper, versehen.

Bei weiteren, nichtdargestellten Ausführungsbeispielen der Erfindung ist das Handwerkzeug gegenüber der Grundplatte mittels eines Parallelogramm-Stützensystem nach vorn oder nach hinten verstellbar, damit für die Schnittiefe besonders fein und variabel eingestellt werden kann.

## Patentansprüche

1. Kraftgetriebenes Handwerkzeug mit einem klingenartigen, auf einer Bahnkurve (15, 56) im wesentlichen parallel zur Oberfläche eines Werkstücks (34) schwingenden Schneidwerkzeug (13, 46) mit mindestens einer Schneide zur spanenden Bearbeitung des, insbesondere aus Holz bestehenden, Werkstücks (34), dadurch gekennzeichnet,
daß das Schneidwerkzeug (13, 46) auf einer gekrümmten, geschlossenen Bahnkurve (15, 56) mindestens einen Arbeitshub ausführt.

2. Handwerkzeug nach Anspruch 1, dadurch gekennzeichnet, daß das Schneidwerkzeug (13, 46) beim Arbeitshub auf einem ersten Teilstück der Bahnkurve (15, 56) schneidend in das Werkstück (34) eintaucht und bei einem Leerhub auf einem anderen Teilstück der Bahnkurve (15, 56) aus dem Werkstück (34) austaucht und dabei ohne zu schneiden, in einem Abstand zum Werkstück (34), geführt ist.

3. Handwerkzeug nach den Ansprüchen 1 oder 2, dadurch gekennzeichnet, daß die Bahnkurve (15, 56) länglich, vorzugsweise elliptisch, ausgestaltet ist, wobei die Mittel-Längsachse der Bahnkurve (15, 56) in wesentlichen in Vorschubrichtung verläuft.

4. Handwerkzeug nach einem der vorhergehenden Ansprüche, dadurch gekennzeichnet, daß das Schneidwerkzeug (13, 56) beim Arbeitshub sich zum Handwerkzeug hin bewegt und beim Leerhub sich vom Handwerkzeug weg bewegt.

5. Handwerkzeug nach einem der vorhergehenden Ansprüche, dadurch gekennzeichnet, daß das Schneidwerkzeug (13, 56) am Ende des Arbeitshubs als Spanfördermittel, insbesondere zur Mündung (64) eines Absaugkanals (62) gerichtet, dient.

6. Handwerkzeug nach einem der vorhergehenden Ansprüche, dadurch gekennzeichnet, daß das Schneidwerkzeug (46) mehrere, durch Wenden nutzbare Schneiden trägt.

7. Handwerkzeug nach einem der vorhergehenden Ansprüche, dadurch gekennzeichnet, daß das Schneidwerkzeug (46) quer zur Vorschubrichtung verschiebbar angeordnet ist, so daß mit dem Handwerkzeug wahlweise rechts- oder linksbündig geschnitten werden kann.

8. Handwerkzeug nach einem der vorhergehenden Ansprüche, dadurch gekennzeichnet, daß der Arbeitshub des Schneidwerkzeugs (46) wenigstens zum Teil vor der Normalprojektion der Handwerkzeugkontur auf dem Werkstück (34) angeordnet ist.

9. Handwerkzeug nach einem der vorhergehenden Ansprüche, dadurch gekennzeichnet, daß der Winkel der Grundplatte (32) sich durch Schwenken verstellen läßt.

10. Handwerkzeug nach einem der vorhergehenden Ansprüche, dadurch gekennzeichnet, daß ein Taumelscheibenantrieb zum Erzeugen der gekrümmten Bewegungsbahn des Schneidwerkzeugs dient.
